# EUROPÄISCHE PATENTSCHRIFT

(11) **EP 0 841 227 B1**
(45) Veröffentlichungstag und Bekanntmachung des Hinweises auf die Patenterteilung: **06.06.2001**
(21) Anmeldenummer: 97118709.1
(22) Anmeldetag: 28.10.1997
(51) Int. Cl.: B60R 22/36

(54) **Kupplungsscheibe für einen Gurtaufroller**
Coupling disc for a belt retractor
Disque d'embrayage pour un rétracteur de sangle

(30) Priorität: 07.11.1996 DE 29619380 U
(43) Veröffentlichungstag der Anmeldung: 13.05.1998
(73) Patentinhaber: TRW Occupant Restraint Systems GmbH & Co. KG, 73551 Alfdorf (DE)
(72) Erfinder: Kielwein, Thomas, 73569 Eschach (DE)
(74) Vertreter: Degwert, Hartmut, Dipl.-Phys.

(56) Entgegenhaltungen:
- EP-A- 0 335 360
- EP-A- 0 752 350
- EP-A- 0 786 384
- DE-A- 3 421 960

## Beschreibung

Die Erfindung betrifft eine Kupplungsscheibe für einen Gurtaufroller, an der eine Steuerklinke verschwenkbar gelagert ist, die aus einer Ruhestellung heraus in eine Eingriffsstellung verschwenkt werden kann, in der sie die Kupplungsscheibe mit einem Funktionsteil des Gurtaufrollers koppelt.

Eine solche Kupplungsscheibe ist Teil eines Sperrmechanismus, mit dem die Gurtspule des Gurtaufrollers, auf die das Gurtband aufgewickelt wird, in fahrzeug- oder in gurtbandsensitiver Weise gegen eine Drehung in der Abwickelrichtung blockiert werden kann. Der Sperrmechanismus eines solchen Gurtaufrollers ist bekannt, weshalb auf ihn hier nur kurz eingegangen wird.

Die Kupplungsscheibe des Sperrmechanismus ist drehfest mit der Gurtspule verbunden. Wenn der Sperrmechanismus fahrzeugsensitiv, also durch Überschreiten einer vorbestimmten Beschleunigung bzw. Verzögerung des Fahrzeugs, oder gurtbandsensitiv, also durch Überschreiten einer vorbestimmten Drehbeschleunigung der Gurtspule aufgrund von in dem Gurtband wirkenden Zugkräften, ausgelöst wird, wird die Steuerklinke aus ihrer Ruhestellung heraus in die Eingriffsstellung verschwenkt, so daß die Gurtspule drehfest mit einem Steuerhebel oder dergleichen Funktionsteil gekoppelt wird, das bei Drehung der Gurtspule in der Abwickelrichtung eine lasttragende Sperrklinke aktiviert und so die Sperrung der Gurtspule hervorruft. Die Gurtspule ist dann in der Abwickelrichtung blockiert.

Wenn sich die Steuerklinke in ihrer Eingriffsstellung befindet, überträgt sie von der Gurtspule über die Kupplungsscheibe diejenigen Kräfte auf das Funktionsteil des Gurtaufrollers, die zum Sperren der Gurtspule notwendig sind. Um zu verhindern, daß diese Kräfte regelmäßig von der Lagerung der Steuerklinke aufgenommen werden müssen und die Lagerung entsprechend dimensioniert werden muß, ist an der Kupplungsscheibe ein Anschlag ausgebildet, an dem sich die Steuerklinke in der Eingriffsstellung derart abstützt, daß die Lagerung weitestgehend entlastet ist. Wenn jedoch die Steuerklinke an dem ihr zugeordneten Funktionsteil des Gurtaufrollers angreift, bevor sie vollständig in ihre Eingriffsstellung verschwenkt ist, insbesondere bei Aufeinandertreffen ihrer Spitze und einer Zahnspitze des Funktionsteils, bleibt der Anschlag an der Kupplungsscheibe wirkungslos, und die gesamte von der Steuerklinke übertragene Kraft wirkt auf die Lagerung ein. Daher muß bei herkömmlichen Kupplungsscheiben die Lagerung für die Steuerklinke im Vergleich zu den üblichen Betriebsbelastungen überdimensioniert werden, damit die Lagerung auch Belastungen standhält, die übertragen werden, wenn sich die Steuerklinke nicht an dem zugeordneten Absatz an der Kupplungsscheibe abstützt. Dies führt zu hoher Reibung und hohem Gewicht.

Durch die Erfindung ist eine Kupplungsscheibe geschaffen, bei welcher die Lagerung nur noch im Hinblick auf die üblichen Betriebsbelastungen und nicht im Hinblick auf möglicherweise vorkommende Spitzenbelastungen dimensioniert werden muß. Somit kann die Lagerung der Steuerklinke leichter dimensioniert werden, woraus sich eine geringere Reibung und ein geringeres Gewicht ergeben. Gemäß der Erfindung ist vorgesehen, daß die Lagerung der Steuerklinke quer zu ihrer Schwenkachse nachgiebig ausgebildet ist und daß ein Widerlager vorgesehen ist, an dem sich die Steuerklinke bei nachgebender Lagerung abstützt. Dieses Widerlager kann die Steuerklinke in jeder ihrer Stellungen abstützen, selbst wenn sie sich nicht in ihrer Eingriffsstellung befindet.

Weitere Merkmale der Erfindung ergeben sich aus den Unteransprüchen.

Die Erfindung wird nachfolgend unter Bezugnahme auf eine bevorzugte Ausführungsform beschrieben, die in der beigefügten Zeichnung dargestellt ist. In deren einziger Figur ist schematisch eine Draufsicht auf eine erfindungsgemäße Kupplungsscheibe dargestellt.

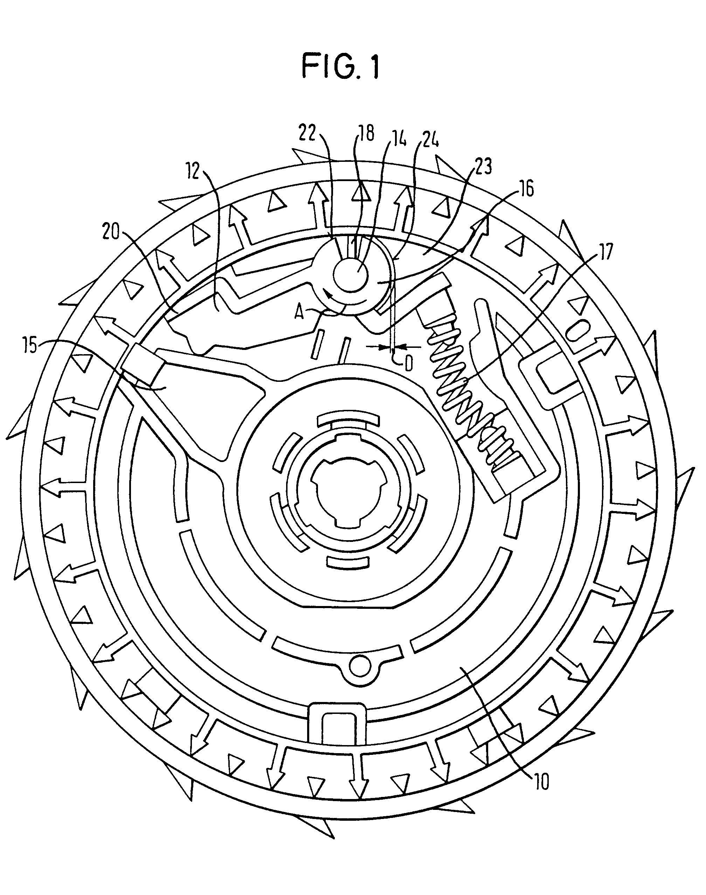

Die in Figur 1 dargestellte erfindungsgemäße Kupplungsscheibe 10 ist mit einer Steuerklinke 12 versehen, die mittels einer als Lagerstift 14 ausgebildeten Lagerung verschwenkbar zwischen einer in dieser Figur dargestellten Ruhestellung und einer Eingriffsstellung gelagert ist. Aus der dargestellten Ruhestellung gelangt die Steuerklinke 12 in die Eingriffsstellung durch eine Drehung in der Richtung des Pfeiles A, hervorgerufen durch eine gleichsinnige Drehung eines Betätigungsteils 15. Eine Feder 17 beaufschlagt die Steuerklinke 12 in ihre Ruhestellung.

Die Steuerklinke 12 weist ein Lagerteil 16 auf, das den Lagerstift 14 umgreift. Das Lagerteil 16 ist an einer Seite offen, wobei sich im Bereich der Öffnung des Lagerteils eine Federlamelle 18 erstreckt, mit welcher der Lagerstift 14 federnd mit der Kupplungsscheibe 10 verbunden ist. Die Federlamelle 18 erstreckt sich in derselben Ebene wie die Längsachse des Lagerstifts 14.

Die Steuerklinke 12 weist ein als Eingriffszahn 20 ausgebildetes Ende auf, das an einem Funktionsteil des Sperrmechanismus des Gurtaufrollers angreifen kann. Wenn sich die Steuerklinke 12 in ihrer Eingriffsstellung befindet, kann somit eine Kraft von der Kupplungsscheibe 10 auf das Funktionsteil entlang einer Richtung übertragen werden, die vorgegeben ist durch eine Gerade durch den Lagerstift 14 und den Eingriffszahn 20. Vom Eingriffszahn 20 entlang dieser Linie gesehen ist die hinter dem Lagerstift 14 liegende Außenkontur 22 des Lagerteils 16 konzentrisch zur Längsachse des Lagerstifts 14 ausgebildet. Gegenüber der Außenkontur 22 liegt ein fest mit der Kupplungsscheibe 10 verbundenes Widerlager 23 mit einer Widerlagerfläche 24, die ebenfalls konzentrisch zur Längsachse des Lagerstifts 14 ist. Die Widerlagerfläche 24 liegt der Außenkontur 22 des Lagerteils 16 in einem vorbestimmten Abstand D gegenüber, der größer als das Funktionsspiel des Lagerteils 16 auf dem Lagerstift 14 ist. Somit ist die Steuerklinke 12 im Normalzustand verschwenkbar auf dem Lagerstift 14 gelagert, ohne daß es zu Reibungen zwischen der Außenkontur 22 des Lagerteils 16 und der Widerlagerfläche 24 kommt. Wenn jedoch von der Steuerklinke 12 Kräfte auf ein Funktionsteil des Gurtaufrollers übertragen werden, kommt es zu einer Verlagerung des mittels der Federlamelle 18 elastisch mit der Kupplungsscheibe 10 verbundenen Lagerstiftes 14, so daß die Außenkontur 22 der Steuerklinke 12 an der Widerlagerfläche 24 in Anlage gelangt. Der Lagerstift 14 wird somit nur mit den Kräften belastet, die notwendig sind, die Steuerklinke 12 bis in Anlage an die Widerlagerfläche 24 zu verlagern. Alle darüber hinausgehenden Kräfte werden direkt von dem Widerlager in die Steuerklinke 12 eingeleitet. Der Lagerstift 14 braucht daher nur im Hinblick auf vergleichsweise geringe Belastungen dimensioniert werden.

## Patentansprüche

1. Kupplungsscheibe für einen Gurtaufroller, an der eine Steuerklinke (12) verschwenkbar gelagert ist, die aus einer Ruhestellung heraus in eine Eingriffsstellung verschwenkt werden kann, in der sie die Kupplungsscheibe (10) mit einem Funktionsteil des Gurtaufrollers koppelt,
dadurch gekennzeichnet,
daß die Lagerung der Steuerklinke (12) quer zu ihrer Schwenkachse nachgiebig ausgebildet ist und daß ein Widerlager (23) vorgesehen ist, an dem sich die Steuerklinke (12) bei nachgebender Lagerung abstützt.

2. Kupplungsscheibe nach Anspruch 1, dadurch gekennzeichnet, daß die Lagerung ein elastisch auslenkbarer Lagerstift (14) ist.

3. Kupplungsscheibe nach Anspruch 2, dadurch gekennzeichnet, daß der Lagerstift (14) mit der Kupplungsscheibe (10) über eine Federlamelle (18) verbunden ist, die sich in derselben Ebene wie die Längsachse des Lagerstifts (14) erstreckt.

4. Kupplungsscheibe nach Anspruch 3, dadurch gekennzeichnet, daß die Steuerklinke (12) den Lagerstift (14) mit einem im Bereich der Federlamelle (18) offenen Lagerteil (16) umgreift.

5. Kupplungsscheibe nach Anspruch 4, dadurch gekennzeichnet, daß das Widerlager (23) von dem an dem Funktionsteil angreifenden freien Ende der Steuerklinke (12) aus gesehen hinter dem Lagerstift (14) liegt und diesem Lagerteil (16) in einem vorbestimmten Abstand (D) gegenüberliegt.

6. Kupplungsscheibe nach Anspruch 5, dadurch gekennzeichnet, daß der vorbestimmte Abstand kleiner als das Spiel des Lagerteils (16) auf dem Lagerstift (14) ist.

7. Kupplungsscheibe nach Anspruch 6, dadurch gekennzeichnet, daß das Lagerteil (16) mit einer Abstützfläche (22) und das Widerlager (23) mit einer Widerlagerfläche (24) versehen sind, die beide konzentrisch mit dem Lagerstift (14) sind.

## Claims

1. A coupling disk for a belt retractor, on which a control pawl (12) is swivellingly mounted for swivelling from a resting position into an engagement position in which the control pawl couples the coupling disk (10) to a functional part of the belt retractor,
characterised in that
the mount of said control pawl (12) is configured so as to yield transversely to its swivel axis and that an abutment (23) is provided on which said control pawl (12) is supported when the mount yields.

2. The coupling disk as set forth in claim 1, characterised in that said mount is an elastically deflectable mounting pin (14).

3. The coupling disk as set forth in claim 2, characterised in that said mounting pin (14) is connected to said coupling disk (10) via a spring plate (18) which extends in the same plane as the longitudinal axis of said mounting pin (14).

4. The coupling disk as set forth in claim 3, characterised in that said control pawl (12) encompasses said mounting pin (14) by a mounting part (16) which is open in the region of said spring plate (18).

5. The coupling disk as set forth in claim 4, characterised in that said abutment (23), as viewed from the free end of said control pawl (12) engaging said functional part, is located behind said mounting pin (14) and opposite said mounting part (16) with a predetermined spacing (D).

6. The coupling disk as set forth in claim 5, characterised in that said predetermined spacing is smaller than the clearance of said mounting part (16) on said mounting pin (14).

7. The coupling disk as set forth in claim 6, characterised in that said mounting part (16) is provided with a supporting surface area (22) and said abutment (23) is provided with an abutment surface area (24), both of which are concentric to said mounting pin (14).

## Revendications

1. Disque d'accouplement pour un enrouleur de ceinture, sur lequel est monté pivotant un cliquet de commande (12) qui, à partir d'une position de repos, peut pivoter dans une position d'engagement dans laquelle il accouple le disque d'accouplement (10) avec une pièce fonctionnelle de l'enrouleur de ceinture, caractérisé en ce que le moyen de support du cliquet de commande (12) est conçu avec la possibilité de s'effacer transversalement à son axe de pivotement, et en ce qu'il est prévu une contre-butée (23) contre laquelle le cliquet de commande (12) prend appui lorsque le moyen de support est en position d'effacement.

2. Disque d'accouplement selon la revendication 1, caractérisé en ce que le moyen de support est une broche de support pouvant être déviée élastiquement (14).

3. Disque d'accouplement selon la revendication 2, caractérisé en ce que la broche de support (14) est reliée au disque d'accouplement (10) par l'intermédiaire d'une lame de ressort (18) qui s'étend dans le même plan que l'axe longitudinal de la broche de support (14).

4. Disque d'accouplement selon la revendication 3, caractérisé en ce que le cliquet de commande (12) entoure la broche de support (14) avec une partie de support (16) ouverte dans la zone de la lame de ressort (18).

5. Disque d'accouplement selon la revendication 4, caractérisé en ce que la contre-butée (23) se trouve derrière la broche de support (14), vue depuis l'extrémité libre du cliquet de commande (12) agissant sur la pièce fonctionnelle et se trouve à une distance prédéterminée (D) en regard de ladite partie de support (16).

6. Disque d'accouplement selon la revendication 5, caractérisé en ce que la distance prédéterminée est inférieure au jeu de la partie de support (16) sur la broche de support (14).

7. Disque d'accouplement selon la revendication 6, caractérisé en ce que la partie de support (16) et la contre-butée (23) sont pourvues respectivement d'une surface d'appui (22) et d'une surface de contre-appui (24) qui sont toutes deux concentriques à la broche de support (14).
